(19)

Europäisches
Patentamt
European
Patent Office
Office européen
des brevets

(11) **EP 3 343 087 A1**

(12) **EUROPEAN PATENT APPLICATION**
published in accordance with Art. 153(4) EPC

(43) Date of publication:
**04.07.2018 Bulletin 2018/27**

(21) Application number: **16839614.1**

(22) Date of filing: **24.08.2016**

(51) Int Cl.:
*F17D 5/00* (2006.01)          *F17D 1/14* (2006.01)
*F16L 55/045* (2006.01)          *F04B 49/10* (2006.01)

(86) International application number:
**PCT/KR2016/009399**

(87) International publication number:
**WO 2017/034325 (02.03.2017 Gazette 2017/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority:  **24.08.2015   KR 20150118635**

(71) Applicants:
• **Flowtech Co., Ltd.
Incheon, 21634 (KR)**
• **Yang, Jae Gu
Incheon, 22001 (KR)**

• **Yang, Ji Suk
Incheon, 22001 (KR)**

(72) Inventors:
• **YANG, Jaw Gu
Incheon 22001 (KR)**
• **YANG, Ji Suk
Incheon 22001 (KR)**
• **OH, Jae Wook
Incheon 22238 (KR)**
• **YANG, Jai Youl
Jinan-gun
Jeollabuk-do 55410 (KR)**

(74) Representative: **Gulde & Partner
Patent- und Rechtsanwaltskanzlei mbB
Wallstraße 58/59
10179 Berlin (DE)**

(54) **PIPE DEVICE INCLUDING SLAM MITIGATING MEANS**

(57)    The present invention relates to a water piping system, and more particularly, to a water piping system configured to reduce slam and water hammer of a check valve through delay of backflow of fluid by ejecting water stored in a pressure tank to a fluid forward direction at a high pressure when a pump in the water pipe is suddenly stopped, and through inducement of complete closure of the check valve by reducing a pressure applied to the check valve.

【FIG. 3】

EP 3 343 087 A1

# Description

[Technical Field]

The teachings in accordance with the exemplary embodiments of this invention relate generally to a water piping system, and more particularly to a water piping system including a slam reduction means configured to mitigate a slam phenomenon generated when a check valve is closed.

[Background Art]

In general, when there is a pump sudden stop or a valve sudden closure in a water piping system, a problem of flux and flow velocity of fluid being suddenly changed as a transient condition, which is called a water hammer.

As a result of water hammer, pressure inside a pipe may suddenly increase, or pressure inside a pipe decrease to less than a saturated vapor pressure to generate steam, and thereafter, breakdown or damage to a pipe conduit may be incurred due to shock wave in the course of column separation and return.

Thus, there is a need to develop a water piping system configured to mitigate or reduce the slam phenomenon in which a check valve is suddenly closed due to water hammer or sudden movement of fluid inside a pipe during pump trip.

[Disclosure]

[Technical problem]

The present invention is directed to solve the aforementioned disadvantages or shortcomings, and is to provide a water piping system configured to compensate a low pressure at a pump discharge side by discharging fluid from a pressure tank when a low pressure is generated at a discharge side due to sudden stop of pump, and the water piping system simultaneously configured to reduce a slam phenomenon of a check valve that may be generated due to fluid of high pressure discharged from a pressure tank.

The present invention is also directed to provide a water piping system configured to reduce a slam phenomenon when a disk of a check valve is closed, wherein the slam phenomenon is a shock pressure wave caused by a transition from a velocity energy of back-flowing pipe water to a pressure energy of back-flowing pipe water.

Technical problems to be solved by the present invention are not restricted to the above-mentioned, and any other technical problems not mentioned so far will be clearly appreciated from the following description by skilled in the art.

[Technical Solution]

An object of the invention is to solve at least one or more of the above problems and/or disadvantages in whole or in part and to provide at least the advantages described hereinafter. In order to achieve at least the above objects, in whole or in part, and in accordance with the purposes of the invention, as embodied and broadly described, and in one general aspect of the present invention, there is provided a water piping system, the water piping system comprising:

    a pump configured to apply pressure on a fluid to a forward direction;
    a main pipe configured to move the fluid pressurized by the pump;
    a check valve configured to open or close the main pipe, and arranged at a discharge side of the pump;
    a pressure tank connected to the main pipe, arranged at a discharge side of the check valve, configured to be operated under a first status introducing the fluid of the main pipe into an inside of the pressure tank in response to a pressure difference between the pressure tank and the main pipe, and configured to be operated under a second status discharging the fluid to the main pipe in response to a pressure difference between the pressure tank and the main pipe;
    a connection pipe connecting the pressure tank to the main pipe; and
    a slam reduction means disposed with a first wall portion,
    wherein the first wall portion restricts the fluid of the pressure tank from being discharged into a backward direction which is an opposite direction of the forward direction when the fluid of the pressure tank is discharged into an inside of the main pipe under the second status,
    wherein the first wall portion discharges the fluid of the pressure tank to the forward direction when the fluid of the pressure tank is discharged into an inside of the main pipe under the second status,
    and wherein the first wall portion is arranged inside the main pipe.

[Advantageous Effects]

The present invention has an advantageous effect in that backflow of fluid can be delayed by ejection of high pressure fluid stored in a pressure tank to a forward direction when a pump is suddenly stopped.

Another advantageous effect is that the present invention is disposed with the slam reduction means restricting backflow of pipe water caused by fluid discharged from the pressure tank, whereby the backflow of pipe water caused by fluid discharged from the pressure tank can be restricted.

Another advantageous effect is that the present invention is simultaneously disposed with the slam reduction means and the pressure tank, whereby slam or water hammer applied to a check valve adjacently installed at the discharge side of the pump can be reduced.

Still another advantageous effect is that a backward flow velocity at the time of closure of check valve can be reduced, and a change in flow velocity at the last moment when a disk of a check valve is closed can be reduced, whereby slam and water hammer of the check valve can be mitigated.

Still further another advantageous effect is that backward flow of fluid can be delayed by allowing a distal end of a connection pipe connecting a main pipe to a pressure tank to face to a forward direction, or by allowing an opening of the connection pipe to face to a forward direction, whereby slam reduction effect or backward flow delay effect can be reinforced by applying an ejector principle. At this time, a pressure applied to a check valve can be relatively reduced, and backward flow of pipe water can be restricted, whereby a shock wave and a water hammer caused by slam phenomenon of the check valve can be reduced.

[Description of Drawings]

FIG.1 is a schematic cross-sectional view of a water piping system in order to compare with the present invention as a comparative exemplary embodiment.
FIG. 2 is a perspective view illustrating an inducement pipe as a slam reduction means according to the present invention.
FIG. 3 is a cross-sectional view illustrating an inducement pipe bent in the shape of an elbow according to the present invention.
FIG. 4 is a cross-sectional view illustrating an inducement pipe bent with a slope according to the present invention.
FIG. 5 is a cross-sectional view illustrating an inducement pipe connected to a joint pipe according to an exemplary embodiment of the present invention.
FIG. 6 is a cross-sectional view illustrating an inducement pipe connected to a header according to an exemplary embodiment of the present invention.
FIG. 7 is a cross-sectional view illustrating an inducement pipe inserted into a header by being straightly extended according to an exemplary embodiment of the present invention.
FIG. 8 is a cross-sectional view illustrating an inflow resistance increaser according to the present invention.
FIG. 9 is a perspective view illustrating an inflow resistance increaser according to various exemplary embodiments of the present invention.
FIG. 10 is a cross-sectional view illustrating an opened status of an inducement disk under a first status according to the present invention.

FIG. 11 is a cross-sectional view illustrating a closed status of an inducement disk under a second status according to the present invention.
FIG. 12 is a cross-sectional view illustrating a inducement pipe provided with a second opening valve according to an exemplary embodiment of the present invention.
FIG. 13 is an exploded view illustrating a first wall portion according to attachable and detachable exemplary embodiment of the present invention.
FIG. 14 is a cross-sectional view illustrating an inducement cylinder according to the present invention.
FIG. 15 is a cross-sectional view illustrating an inducement guide according to the present invention.

[Best Mode]

Hereinafter, configuration and operation of the water piping system including a slam reduction means will be described in detail with reference to the accompanying drawings.

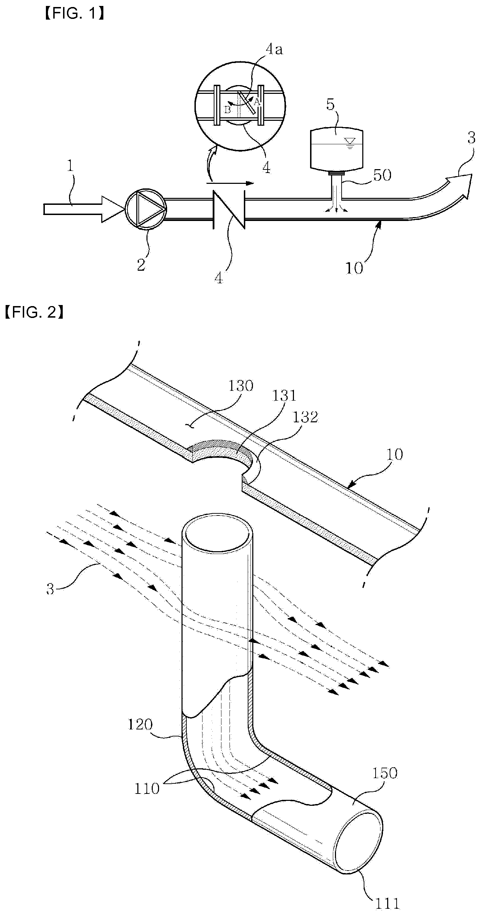

FIG.1 is a schematic cross-sectional view of a water piping system in order to compare with the present invention as a comparative exemplary embodiment.

The comparative water piping system illustrated in FIG. 1 may include a pump (2) applying a pressure to fluid introduced from a suction side (1), a main pipe (10) transferring the pressurized fluid and a discharge side discharging the transferred fluid to a forward direction.

Referring to FIG. 1, the suction side (1) or an upstream side of the main pipe (10) may be connected with the pump (2) and a check valve (4). The fluid discharged from the pump (2) may be transferred to a discharge side corresponding to a right side of the main pipe (10) or to a downstream side of the main pipe (10).

Here, flow inside the main pipe (10) facing the discharge side is defined as a forward flow (3). A direction flowing by the forward direction flow (3) is a forward direction and an opposite direction of the forward direction is defined as a backward direction.

A check valve (4) for preventing backflow toward the suction side (1) may be installed at a discharge side of the pump (2). The main pipe (10) may be installed not only with a check valve (4) for preventing backflow but also with a flexible joint (not shown) for vibration prevention and a shut-off valve (not shown) for shutting off fluid introduced toward the discharge side.

When the pump (2) is suddenly stopped in the water piping system, the existing pipe water transferred through the forward direction may temporarily and continuously flow to the forward direction of the main pipe by the inertia, whereby negative pressure may be generated on a side of the pump (2) tripped or a vapor cavity may be generated inside the pipe.

At this time, the vapor capacity may be destructed and a high shock wave may be generated while a pipe water of high potential energy backflows toward the check valve (4), whereby the check valve (4), the pump (2) and the main pipe (10) may be destroyed. Meantime, the water shock may be caused from slam phenomenon due to sudden closure of the check valve (4).

Referring to FIG. 1 and the following Equation 1, the slam phenomenon is a phenomenon where the disk (4a) forming the check valve (4) is opened to a transfer direction of the fluid as indicated by an arrow 'A' and the disk (4a) forming the check valve (4) is suddenly closed by the back-flowing fluid during sudden stop of the pump (2) as indicated by an arrow 'B', and where the velocity energy of the back-flowing fluid is changed to pressure energy of the back-flowing fluid. To put it simply, the slam phenomenon is a phenomenon where the disk (4a) is slammed with a 'thud'.

(Equation 1)

$$\Delta H = (C/g)\, \Delta V,$$

where, 'H' is a lift, 'C' is a shock wave transmission velocity in response to pipe material characteristic, 'g' is a gravitational acceleration, and 'V' is a fluid velocity.

Referring to FIG. 1, in order to reduce the water hammer, a pressure tank (5) may be additionally installed to the forward direction. At the moment when a negative pressure and vapor cavity are formed at upstream side of the pump (2) due to sudden stop of the pump (2), the fluid of high pressure stored in the pressure tank (5) may be introduced into the main pipe (10) so as to restrict the generation of vapor cavity. As a result, pressure drop within the main pipe (10) can be prevented, and the shock wave caused by back-flow of fluid can be mitigated, and an effect of reducing the water hammer can be accomplished to a certain degree by installing the pressure tank (5).

The generation of cavity in the main pipe (10) can be restricted through installation of the pressure tank (5), and an effect of reducing the shock wave in the back-flowing pipe water can be brought in to a certain degree. However, the check valve (4) can be rather suddenly closed to generate a slam phenomenon by the fluid of high pressure discharged from the pressure tank (5).

The backflow in the main pipe (10) may be generated by the fluid of high pressure discharged from the pressure tank (5), and a disk (4a) in the check valve (4) can be suddenly closed by the back-flowing pipe water. When the disk (4a) in the check valve (4) is closed, a sudden change in flow velocity of the back-flowing pipe water is generated, and, due to the sudden change in flow velocity, velocity energy may be changed to pressure energy to generate a shock pressure wave (slam phenomenon) (see Equation 1).

Thus, in order to reduce the water hammer in the water piping system installed with the pressure tank (5), there is a need to equip a slam reduction means capable of restricting back-flow of pipe water generated by fluid of high pressure discharge from the pressure tank (5), lest the slam phenomenon of the check valve during back-flow of pipe water be generated.

FIGS. 2 - FIGS.15 are exemplary embodiments of the present invention disposed with pressure tank (5) and slam reduction means. The water piping system may include all piping systems including general water supply conduits, circulation pipes for cooling and heating and industrial purposes, agricultural and industrial water conduits, petrochemical plants and beverage conduits.

The present invention can restrict sudden opening/closing of check valve (5) and back-flow of pipe water by disposing pressure tank (5) and slam reduction means. Thus, the slam in the check valve (4) can be mitigated by restricting back-flow of pipe water even during installation of the pressure tank (5).

In the water piping system installed with pressure tank (5) for water hammer prevention, the present invention can mitigate the check valve (4) from sudden opening/closing caused by pressure of fluid discharged from the pressure tank (5) during sudden stop of the pump (2), whereby generation of shock wave caused by slam phenomenon in the check valve (4) and water hammer generated therefrom can be reduced.

The pump (2) and the check valve (4) may be provided in the plural number. Each pump (2) is connected to each check valve (4), and the fluid having passed the pump (2) and the check valve (4) can be transferred to the main pipe (10). Meantime, when the pump (2) and the check valve (4) are provided in the plural number, the fluid pressurized by the plurality of pumps (2) that is connected in parallel can be collected by a header (12), wherein the header (12) transfers the collected fluid to the forward direction.

The pressure tank (5) may function to prevent generation of negative pressure in the main pipe (10). The pressure tank (5) may reserve fluid for introducing or discharging in response to a pressure difference with the main pipe (10), and compressible gas acting as an elastic cushioning means to apply discharging force to the discharging fluid. The pressure tank (5) may function to reduce the pressure rise of the main pipe (10) by compressing a compressible gas inside the pressure tank (5) during pressure rise in the main tank (10). The pressure tank (5) may function to reduce the pressure change in the main pipe (10) by introducing or discharging the incompressible fluid in response to a pressure difference with the main pipe (10).

The pump (2) trip means an abnormal operation of the pump (2). At an initial point when the pump (2) trip is generated, the pressure in the pump (2) or in the main pipe (10), drops, such that the pressure tank (5) comes to be a second status discharging the fluid to the main pipe (10), and the pressure tank (5) performs a function of elastic cushioning means that reduces a range of a pressure drop of the main pipe (10). At this time, the pressure tank (5) is a means to increase the pressure in the main pipe (10).

Thereafter, the fluid flowing to the downstream side by the inertia, loses the inertial power because of friction loss in the pipe or gravity, and returns to the upstream side of the main pipe (10). The fluid that returns to the backward direction is called a back-flow. When the back-flow is generated in the pressure tank (5), the pressure inside the main pipe (10) increases suddenly, and the pressure tank (5) comes to be a first status that introduces the fluid from the main tank (10), and the pressure tank (5) comes to be an elastic cushioning means absorbing a pressure rise level of the main pipe (10). At this time, the pressure tank (5) is a means to reduce the pressure in the main pipe (10).

The pressure tank (5) may store gas which is a compressible fluid in an upper side during a normal operation, and store the pipe water which is incompressible fluid in a lower side and may become in a status of preparing a counter step for the water hammer. When the pressure in the main pipe (10) is dropped, the pipe water which is incompressible fluid may be introduced into the main pipe (10) by the energy of pressurized gas. When the pressure in the main pipe (10) increases, the pipe water may be introduced into the pressure tank (5) to pressurize the compressible gas and may act to reduce the pressure rise.

The gas in the pressure tank (5) is compressed in a first status, and expanded in a second status. Thus, the pressure tank (5) may perform a function similar to an elastic spring or a damper configured to absorb pressure change of fluid in the main pipe (10). According to the present invention, the pressure tank (5) may include a contact type pressure tank (5) where gas and incompressible fluid are contacted, or a non-contact type pressure tank (5) embedded with a bladder or a diaphragm.

Meantime, the check valve (4) may be closed when a pressure at a rear side is higher than that at a front side. The slam is a shock pressure wave generated during sudden closure of the disk where the disk of the check valve is suddenly closed. During the pump (2) trip, the pressure at a front side of the check valve may instantly drop to zero (0), and the width of pressure decrease at the rear side of the check valve (2) is mitigated while the fluid is discharged to the main pipe (10) from the pressure tank (5).

When the pressure at the rear side is higher than that of the front side, the check valve (4) may be closed. The check valve (4) may be closed at the second status where the fluid is discharged from the pressure tank (5) to the main pipe (10). In order to restrict the sudden closure, a pressure difference between the front side and the rear side of the check valve (4) must be reduced under the second status where the fluid is discharged from the pressure tank (5) to the main pipe (10), and the slam reduction means does the said function.

In order to reduce the difference between the front side and the rear side of the check valve (4) under the second status, the slam reduction means may reduce the

compensation speed at which the pressure tank (5) suddenly compensates pressure drop at the rear side of the check valve (4), or the slam reduction means may control the fluid discharge directivity for pressure compensation, whereby the slam can be restricted.

The fluid discharged from the pressure tank (5) during the pump (2) trip is to compensate the pressure drop of the main pipe (10). The slam reduction means can reduce the slam by inducing a discharge direction of the fluid in the pressure tank (5) performing the pressure compensation to a forward direction. When a principle of ejector is used during inducement of fluid to the forward direction of the main pipe (10), a further reduction of slam can be effectively implemented. The slam reduction means can reduce a pressure difference across the check valve (4) by delaying a pressure compensation velocity at a rear side of the check valve (4).

A method for reducing a pressure difference between a front side and a rear side of the check valve (4) during pump (2) trip may be a method to delay a pressure rise of the rear side of the check valve (4) by the back-flow, or a pressure rise of the rear side of the check valve (4) by a fluid discharge of the pressure tank (5) even at a smallest level.

Thus, the slam reduction means induces the fluid discharged to the main pipe (10) from the pressure tank (5) during pump (2) trip to be discharged to a downstream side, which is an opposite side of the check valve (4). The slam reduction means induces the fluid to the forward direction to which the fluid is discharged. To this end, it would be more effective to utilize the principle of ejector to the slam reduction means.

The ejector is one of fluid transfer devices, and may be similar to a fluid transfer device adopting an impeller rotating like the pump (2), but the peculiar point is that the ejector is a fluid transfer device free from a constitutional element that is continuously rotated and moved like an impeller. In the present invention, when the pressure of the main pipe (10) drops, the fluid discharged from the pressure tank (5) may be discharged to the discharge direction of the main pipe (10), i.e., to the forward direction, and the fluid at the pump (2) side and the check valve (4) side may be induced to the forward direction using the ejector principle. In this case, the back-flow phenomenon can be reduced when the pump (2) is suddenly stopped, and the fluid discharged from the pressure tank (5) to the main pipe (10) may not back-flow to the check valve (4) and the pump (2).

The present invention can reduce the slam by lowering the pressure to the rear side of the check valve (4) even by a small level, using the ejector principle that provides directivity of the discharged fluid. In the exemplary embodiment of the present invention, the water piping system may include a pump (2), a main pipe (10), a check valve (4), a pressure tank (5), a connection pipe (50) and a slam reduction means.

The pump (2) may supply the fluid to the discharge side of the main pipe (10) by applying a pressure to the fluid to the forward direction. The main pipe (10) may be defined as all pipes that transfer the fluid pressurized by the pump (2). Thus, the main pipe (10) may include at least one of a joint pipe (13), a header (12), a T-shaped main pipe (210), a first main pipe (101) and a second main pipe (102).

The check valve (4) may open and close the main pipe (10) at the discharge side of the pump (2). The pump (2) may be prevented from being damaged by the back-flow because the fluid back-flowed from the discharge side is interrupted by the check valve (4). The check valve (4) may be closed when a pressure at the rear side increases, and may be opened when the pressure of the front side increases due to the pump (2) being activated. During the pump (2) trip, the check valve (4) may be closed because the pressure at the rear side is high, and during normal driving of the pump (2), the check valve (4) may be opened because the pressure at the front side is high.

The pressure tank (5) may be connected at the discharge side of the check valve (4) to the main pipe (10), and may be operated under the first status in which the fluid of the main pipe (10) is introduced inside the pressure tank (5), and under the second status in which the fluid is discharged to the main pipe (10), in response to a pressure difference between the main pipe (10) and the pressure tank (5).

The connection pipe (50) may include all shapes of pipes connecting the pressure tank (5) to the main pipe (10). Although the drawings illustrate the connection pipe (50) as a single pipe, the connection pipe (50) may include any shapes of pipes such as double pipes or bent pipes as long as the pipes connect the pressure tank (5) to the main pipe (10).

The fluid discharged to the forward direction by the slam reduction means can restrict the vapor cavity formed by pressure drop of the fluid in the main pipe (10) under an open or closed status of the check valve (4). Furthermore, the fluid discharged to the forward direction by the slam reduction means can push out the fluid inside the main pipe (10) under the second status to a direction distancing from the check valve (4) and can fundamentally reduce the water hammer or the slam of the check valve (4).

The slam reduction means may be disposed with a first wall portion (110) providing a discharge directivity to the fluid of the pressure tank (5) under the second status in which the pressure tank (5) discharges the fluid to the main pipe (10) for the pressure compensation at the rear side of the check valve (4) during the pump (2) trip.

The first wall portion (110) must be arranged at an area where the fluid in the pressure tank (5) and the fluid inside the main pipe (10) are crossed to thereby provide the fluid directivity of the pressure tank (5). To this end, the first wall portion (110) may be arranged inside the main pipe (10). Thus, the slam reduction means may be provided at a position where the connection pipe (50) communicates with an inside of the main pipe (10).

The first wall portion (110) is a means that may restrict the fluid in the pressure tank (5) from being discharged to a backward direction which is an opposite direction of forward direction when the fluid in the pressure tank (5) is discharged into the inside of the main pipe (10) under the second status, and the first wall portion (110) discharges the fluid in the pressure tank (5) to the forward direction. To this end, the first wall portion (110) is preferably arranged inside the main pipe (10).

The first wall portion (110) may provide flow directivity for the fluid by facing the fluid of the pressure tank (5), and forms a conduit of fluid within the definition thus defined. Thus, the first wall portion (110) may include all types of fluid conduits including a plate having a flat surface or a curved surface, and a shell type fluid conduit.

The first wall portion (110) in an exemplary embodiment may have a flat or a curved surface shape, a flat shape guiding the flow of the fluid, or a shell shape. The first wall portion (110) may change the discharge direction of fluid in the pressure tank (5) to a forward direction when the fluid of the pressure tank (5) reaches the flat surface or curved surface forming the first wall portion (110) under the second status. The first wall portion (110) in an exemplary embodiment may face the fluid introduced into the pressure tank (5) under the first status, and may face the fluid discharged from the pressure tank (5) to the main pipe (10) under the second status.

For example, the first wall portion (110) may be at least one of an inner wall of the inducement pipe (150), a lateral surface of an inducement disk (160), a lateral surface of a second opening valve (153), an inner wall of an inducement cylinder (140), and a lateral surface of an inducement guide (170).

The inner wall of the inducement pipe (150), an exemplary embodiment of the first wall portion (110), can restrict the fluid in the pressure tank (5) from flowing to the backward direction, and allows flowing to an opposite direction of the check valve (4), such that the inner wall of the inducement pipe can be slam reduction means.

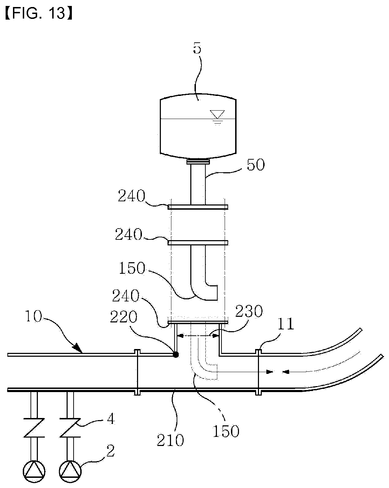

The lateral surface of the inducement disk (160), which is an exemplary embodiment of the first wall portion (110), may so rotate as to close at least a part of the main pipe (10) under the second status. The lateral surface of the second opening valve (153) as illustrated in FIG. 13 may so rotate as to close the inducement pipe (150). These types of first wall portion (110) may be slam reduction means that restricts the backward flow of fluid in the pressure tank (5) and induces the flow to the forward direction.

The inner wall of the inducement cylinder (140) or the lateral surface of the inducement guide (170), which is an exemplary embodiment of the first wall portion (110), may be slam reduction means discharging the fluid of the pressure tank (5) to the forward direction because of being formed with an opening or a distal end exposed to the forward direction.

Meantime, the slam reduction means may include a second wall portion (120) which is an opposite surface of the first wall portion (110). The second wall portion (120) may face the forward fluid transferred from the pump (2), or the fluid inside the main pipe (10). The second wall portion (120) may face the forward fluid transferred from the pump (2) under the first or second status. The second wall portion (120) may partially separate the fluid of the pressure tank (5) from the fluid of the main pipe (10). The second wall portion (120) may reduce the forward frictional resistance in response to the shape of the second wall portion (120) when the fluid of the main pipe (10) is flowed to the discharge side.

For example, the second wall portion (120) may be at least one of an external wall of the inducement pipe (150), the other lateral surface of the inducement disk (160), the other lateral surface of the second opening valve (153), an external wall of the inducement cylinder (140) and the other lateral surface of the inducement guide (170).

The external wall of the inducement pipe (150), an external wall of the inducement cylinder (140) and the other lateral surface of the inducement guide (170), which is an exemplary embodiment of the second wall portion (120), may take a round shape or a streamlining shape to reduce the forward frictional resistance of the fluid in the main pipe (10).

The other lateral surface of the inducement disk (160), which is an exemplary embodiment of the second wall portion (120), may reduce the forward frictional resistance because of being opened to a direction opening the main pipe (10) under the first status. The other lateral surface of the second opening valve (153) as illustrated in FIG. 13 may reduce the forward frictional resistance because of being rotated to an opened position relative to the forward flow.

Meanwhile, the slam reduction means may include a support portion (130) supporting the first wall portion (110) or the second wall portion (120) to the main pipe (2) or the connection pipe (50). For example, the support portion (130) may include a welding portion (132) illustrated in FIG.2. The inducement pipe (150) may be inserted into a fixation hole (131) formed at the main pipe (10) and may be supported by the fixation hole (131).

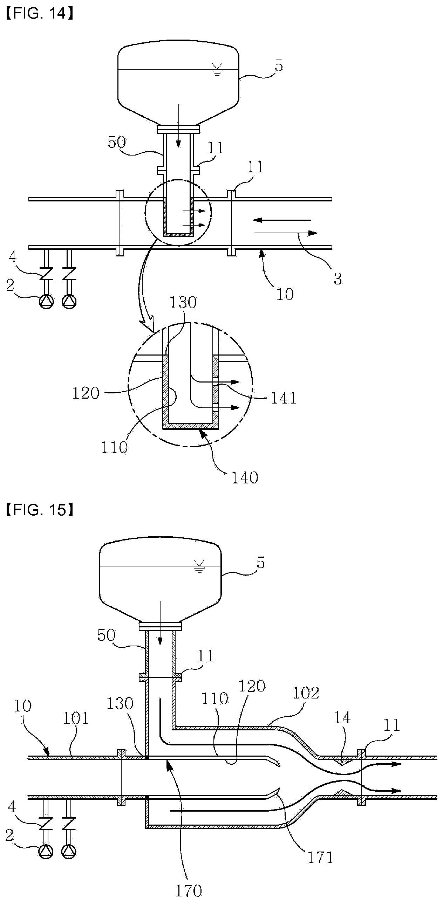

Meanwhile, the support portion (130) may include an inducement disk hinge (162) or a second opening valve hinge (154). The support portion (130) may include a connection portion between the inducement cylinder (140) of FIG. 14 and main pipe (10), or a connection portion between the inducement guide (170) illustrated in FIG. 15 and a first main pipe (101).

The water piping system illustrated in FIGS. 2-15 may include slam reduction means in order to prevent the backflow of pressure tank (5) or the slam phenomenon of the check valve (4) during sudden stop of the pump (2) by introducing ejector effect. The ejector is one type of jet pump capable of sending at a high velocity a surrounding fluid to other places by ejecting water, vapor or air having a pressure, and may be largely used for pumping of waste water or mud water and for condenser, and may be used for discharging vapor or water, or may be used for condensation.

The present invention has adopted the thus-described function and structure of ejector as slam reduction means. The slam reduction means may be provided at an area where the connection pipe (50) and the main pipe (2) are connected. When the inducement pipe (150) is configured to face the forward direction as illustrated in FIG. 2 as a result of experiment by manufacturing an actual mock-up of the water piping system, it is identified that water hammer can be mitigated or reduced by about 20% over that of FIG. 1.

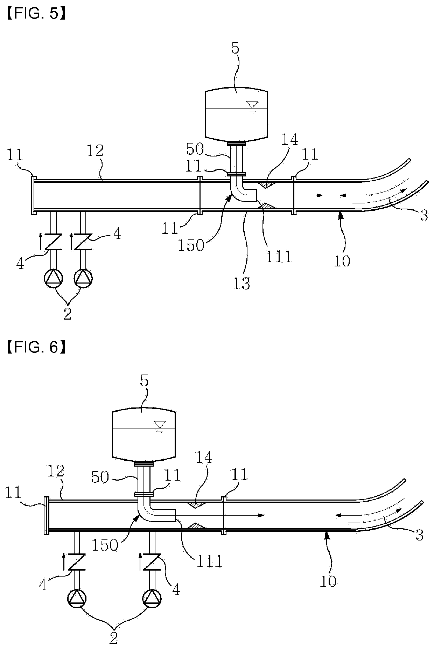

The main pipe (10) according to an exemplary embodiment may include a joint pipe (13). The joint pipe (13) may take both sides-opened shape and may be attached to or detached from the main pipe (10) by a pipe joint member (11). Referring to FIG. 5, the connection pipe (50) and the slam reduction means may be connected to the joint pipe (13) to communicate with the main pipe (10) and the first wall portion (110) may be disposed at the joint pipe (13). Albeit not being illustrated, the inducement disk (160), the inducement cylinder (160) and the inducement guide (170) may be disposed at the joint pipe (13), as illustrated in FIG. 5.

In an exemplary embodiment, the main pipe (10) may include a header (12). The header (12) may be connected to a rear side of the check valve (4) to collect or gather the fluid discharged from the pump (2). Referring to FIG. 6, the connection pipe (50) and the slam reduction means may be connected to the header (12) to communicate with the main pipe (10), and the first wall portion (110) may be disposed at the header (12). Albeit not being illustrated, the inducement disk (160), the inducement cylinder (140) and the inducement guide (170) may be also disposed at the header (12) of FIG. 6.

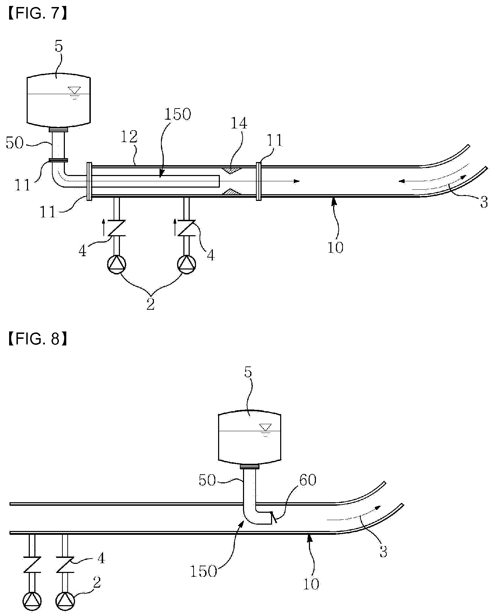

Now, referring to FIG. 7, the first wall portion (110) may be inserted into the header (12) from a distal end of the header (12) to be horizontally and parallel arranged with the header (12) in order to allow the fluid of the pressure tank (5) to face the forward direction. When the inducement cylinder (140) is also parallel inserted into a distal end of the header (12) to the forward direct as illustrated in FIG. 14, the same exemplary embodiment can be implemented.

In an exemplary embodiment, a venturi (14) may be provided at a farther rear side than the slam reduction means in order to act a flow resistance to the fluid discharged from the slam reduction means to the forward direction. The venturi (14) is a means to narrow a cross-section of the main pipe (10). The fluid discharged from the slam reduction means passes a narrow cross-section of the venturi (14) to quicken the velocity and to absorb surrounding pipe water due to pressure drop. When the fluid reaches a broadened cross-section at a rear side of the venturi (14), pressure rises to allow the fluid to be ejected, whereby a backflow delay effect of the pipe water can be further increased to further increase the slam reduction effect of the check valve (4).

FIGS. 2-9 illustrate a first exemplary embodiment of the present invention. Referring to FIGS. 2-9, the pressure tank (5) may be connected to the main pipe (10) by the connection pipe (50), and the pressure tank (5) may be connected to a discharge side of the check valve (4) or to a rear side (discharge side) of the check valve (4).

The first wall portion (110) according to an exemplary embodiment is a member integral with or separate/different from the connection pipe (50) and may take a shape of a pipe connected to the connection pipe (50). The first wall portion (110) may be extended to an inside of the main pipe (10) and an opening of a distal end (111) at the first wall portion (110) may face the forward direction, and fluid of the pressure tank (5) passes the connection pipe (50) through the opening of the distal end (111) of the first wall portion (110) to be discharged into an inside of the main pipe (10). The slam reduction means according to an exemplary embodiment of the present invention may include a pipe-shaped inducement pipe (150) arranged inside of the main pipe (10) by being connected to the connection pipe (50). An inner wall of the inducement pipe (150) is formed with the first wall portion (110), the inducement pipe (150) may be formed to be bent to face the forward direction, or diagonally arranged to the forward direction.

The inducement pipe (150) or the connection pipe (50) may be extensively formed into an inside of the main pipe (10) from an outside of the main pipe (10), or may be bent in an elbow shape to allow an opening to face the forward direction of fluid.

When a pressure drop is generated at a rear side of the check valve (4) during sudden stop of the pump (2), the fluid may be discharged from the main pipe (10) to the pressure tank (5). At this time, the discharged fluid may be induced to the forward direction by the slam reduction means.

When a distal end of the inducement pipe (150) or the connection pipe (50) is bent to face the forward direction, the fluid discharged from the pressure tank (5) may be induced to an opposite direction of the check valve (4). That is, the fluid may be induced to a discharge side.

The fluid discharged from the pressure tank (5) by the ejector effect may be temporarily induced to the forward direction. When the back-flow of the fluid in the main pipe (10) is temporarily delayed by the slam reduction means, the pressure transmitted to a disk (4a of FIG. 1) of the check valve (4) may be relatively lowered over a case where the comparative object of connection pipe (50) of FIG. 1 is applied.

Furthermore, a back-flow velocity or a pressure difference between a front side and a rear side of the check valve (4) may be more lowered than a case where the comparative object of connection pipe (50) of FIG. 1 is applied according to the present invention. When the slam reduction means is provided, the check valve (4) is closed where the pressure difference of the front side and the rear side is in a lowered status, such that the slam phenomenon of the check valve (4) can be reduced to accomplish the water hammer reduction effect.

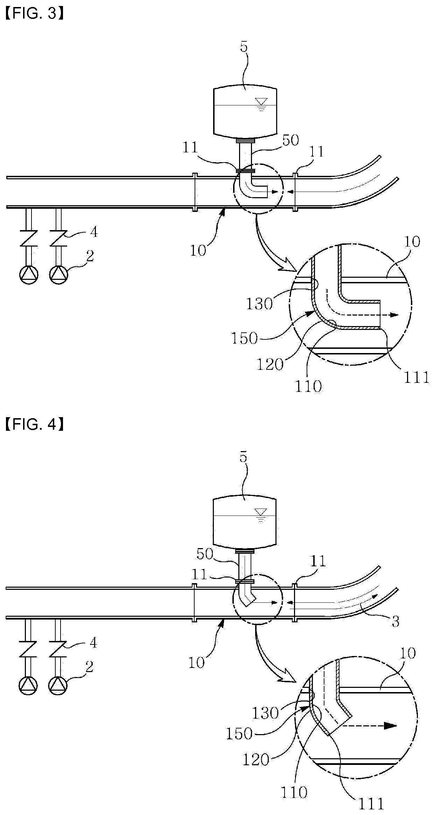

Meantime, as illustrated in FIG. 4, the inducement pipe (150) or the connection pipe (50) may be extended into an inside of the main pipe (10) to take a straight pipe shape diagonally arranged to allow an extended distal end to face the forward direction of the fluid. When the distal end of the opening at the connection pipe (50) faces the forward direction of the fluid, the fluid-discharging opening faces the forward direction, such that there is no particular limitation to the structure thereof.

Meantime, as illustrated in FIG. 5, the venturi (14) may be formed at a distal end of a rear side of the pressure tank (5) to the forward direction. The venturi (14) means a conduit in which a cross-section is narrowed and then broadened or enlarged in turn, and when fluid passes the venturi (14), the velocity of fluid is increased by the Bernoulli's theorem as the cross-section is narrowed, and the pressure drops as a result thereof. The fluid whose discharge was stopped by sudden stop of the pump (2) may pass the venturi from the pump (2) through the check valve (4) to be transferred to the downstream side of the main pipe (10), which may be also called an ejector principle. When the disk of the check valve (4) is closed due to the principle of ejector lifted by the venturi (14), the disk of the check valve (4) is suddenly closed to reduce the slam that may be generated.

When the venturi (14) is installed at the main pipe (10) at a distal end of a rear side of the inducement pipe (150) or the connection pipe (50), the fluid ejected through the connection pipe (50) may pass the narrow cross-section of the venturi (14) to make the velocity faster. Because the fluid is transferred from the check valve (4) side through the venturi (14) due to pressure drop, a back-flow at this area is reduced and the delay effect of back-flow of the fluid can be further enlarged to maximize the slam reduction effect of the check valve (4).

Meantime, as discussed above, the pressure tank (5) may prevent the negative pressure by allowing the fluid to be discharged to the main pipe (10) during sudden stop of pump (2) while the pressure tank (5) stores the fluid thereinside during normal times. When the fluid is back-flowed, and in order to absorb the shock by the pressure of the back-flowing fluid, a part of the fluid is made to be absorbed into the pressure tank (5) to reduce the water hammer. The egress and ingress of the fluid in and outside of the pressure tank (5) may be repeated until the water shock is completely eliminated.

In order to prevent the water hammer by the pressure tank (5), the pressure tank (5) must be maintained at a relatively high operation pressure, and when the fluid is introduced into the pressure tank (5), the frictional resistance is increased and the operation pressure of the pressure tank (5) can be maintained at a lower level.

To this end, the prior art has suffered from disadvantages in that a separate valve and structure were added to make the piping structure complicated to increase the manufacturing costs, wherein a bypass pipe is installed at the connection pipe (50), the bypass pipe is connected at both ends to the pressure tank (5) and the main pipe (10) while being parallel with the connection pipe (50), and the connection pipe (50) is installed with the check valve (4), and when fluid flows from the pressure tank (5) to the main pipe (10), the negative pressure is eliminated, and when the fluid flows from the main pipe (10) to the pressure tank (5), the fluid flows to the bypass pipe where the frictional resistance is great.

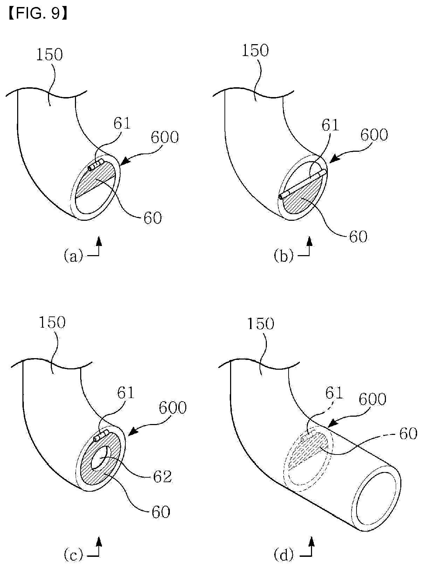

In order to solve the aforesaid disadvantages, it is preferable that an inflow resistance increaser (600) be provided as illustrated in FIG. 9 according to an exemplary embodiment of the present invention.

The inflow resistance increaser (600) can reduce the operation pressure of the pressure tank (5) by increasing the resistance of fluid introduced into the pressure tank (5) under the first status. The inflow resistance increaser (600) may be installed at a flow path of the fluid of the pressure tank (5), and the flow path of the fluid of the pressure tank (5) reaches the first wall portion (110) from the pressure tank (5) through the connection pipe (50). The inflow resistance increaser (600) may include a resistance disk (60) closing at least a part of the flow path of the fluid in the pressure tank (5) under the first status.

The resistance disk (60) can reduce the operation pressure of the pressure tank (5) in response to the increase in the frictional resistance by increasing the flow velocity through the reduction in a cross-section passed by the fluid introduced into the pressure tank (5) when the fluid is back-flowed during occurrence of water hammer.

The resistance disk (60) may be rotatably configured by being coupled to an opening at a distal end of the inducement pipe (150) or the connection pipe (50) via a resistance disk (61). It is preferable that the resistance disk (60) be rotatably opened to a front side when the fluid is discharged to the forward direction from the pressure tank (5), and be closed when the fluid flows backward to thereby cover a part of the opening of inducement pipe (150) or the connection pipe (50). An area of the opening of the inducement pipe (150) and the connection pipe (50) covered by the resistance disk (60) may be different based on the water piping system, but it is preferable that cavitation not be generated by an excessive increase in flow velocity.

The resistance disk (60) according to an exemplary embodiment of FIG. 9(a) may be so configured as to cover a part of an upper side of the opening at the inducement pipe (150) or the connection pipe (50) and may be rotatably coupled to an upper side of a periphery at a distal end of the resistance disk (6) using a resistance disk hinge (61).

The resistance disk (60) according to an exemplary embodiment of FIG. 9(b) may be so configured as to cover only a part of a bottom side of the opening at the inducement pipe (150) or the connection pipe (50) in a semi-circle shape, and the resistance disk hinge (61) is preferably so arranged as to traverse the inducement pipe (150) or the connection pipe (50).

The resistance disk (60) according to an exemplary embodiment of FIG. 9(c) may be formed in a circular shape coupled at an upper side of the inducement pipe (150) or the connection pipe (50) to the resistance disk hinge (61) and may be formed at a center of the resistance disk (60) with a resistance disk orifice (62) to allow the fluid to pass therethrough. As a result, when the fluid inside the pressure tank (5) is discharged to the main pipe (10), the resistance disk (60) is completely opened to allow the fluid to be smoothly discharged, and when the fluid is introduced from the main pipe (10) into the pressure tank (5), the resistance disk (60) is closed to allow a part of the opening of the inducement pipe (150) or the connection pipe (50) to be opened, and to allow the frictional resistance to increase, such that the pressure of fluid is decreased over when the opening is fully opened to allow the fluid to be introduced into the pressure tank (5). Thus, the design pressure can be reduced due to the operation pressure of the pressure tank (5) being lowered.

The resistance disk (60) according to an exemplary embodiment of FIG. 9(d) may be disposed at a midsection of the inducement pipe (150) or at a midsection of the connection pipe.

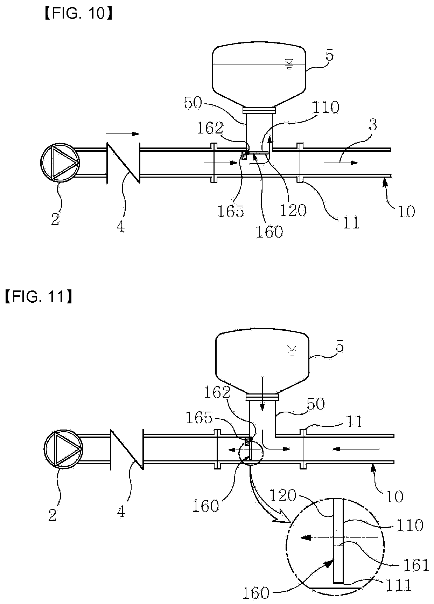

The second exemplary embodiment of the slam reduction means illustrated in FIGS. 10-11 may be disposed with an inducement disk (160)

The slam reduction means according to an exemplary embodiment of the present invention may include an inducement disk (160) provided inside the main pipe (10) between the check valve (4) and the connection pipe (50).

The inducement disk (160) may act as a first resistance to the fluid flowing to the forward direction and may act as a second resistance greater than the first resistance that flows to a backward direction. The inducement disk (160) may reduce a cross-sectional area of the main pipe (10) to restrict the fluid of the pressure tank (5) from flowing to the backward direction and to induce the fluid to be discharged to the forward direction, when the fluid is discharged from the pressure tank (5) to the main pipe (10).

The inducement disk (160) may open the main pipe (10) during activation of the pump (2), and may partially close the connection pipe (50). The inducement disk (160) may open the connection pipe (50) and may only partially close the main pipe (10) during the pump (2) trip or stop. The inducement pipe (160) may include a first wall portion (110) facing the fluid of the pressure tank (5) discharged from the connection pipe (50).

The first wall portion (110) may correspond to one lateral surface of the inducement disk (160). The inducement disk (160) may open/close the main pipe (10) in response to the pressure of the fluid flowing to the forward direction. The inducement disk (160) may open/close the main pipe (10) in response to a difference between the pressure applied by the fluid discharged from the pressure tank (5) to the first wall portion (110) and the pressure applied by the fluid of the main pipe (10) to the second wall portion (120). When the fluid of the pressure tank (5) is discharged, the first wall portion (110) may close the main pipe (10) and restrict the fluid of the pressure tank (5) from flowing backward to the backward direction.

The inducement disk (160) may include a second wall portion (120) facing the fluid of the forward direction transferred from the pump (2). The second wall portion (120) may correspond to the other surface of the inducement disk (160). The inducement disk (160) may include a support portion (130) rotatably connecting the first and second wall portions (110, 120) to the connection pipe (50) or to the main pipe (10). The support portion (130) may include an inducement disk hinge (162).

A position of the inducement disk (160) so rotated as to open the main pipe (10) and a position of the inducement disk so rotated as to close the main pipe (10) may form an acute angle, whereby the fluid from the pressure tank (5) can be changed in direction more quickly to the forward direction. The inducement disk (160) may be rotated to a position to restrict the fluid of the pressure tank (5) from flowing to the backward direction when the fluid of the pressure tank (5) is discharged from the connection pipe (50) to the main pipe (10).

Structure is simple to allow installation, maintenance and repair to be easily performed, because egress and ingress of fluid to and from the pressure tank (5) is implemented through a single pipe including a valve body installed with the inducement disk (160).

It is preferable that the inducement disk (160) be rotatably disposed by the inducement disk hinge (162) at an area nearer to the check valve (4) among areas criss-crossed by the main pipe (10) and the connection pipe (60). The inducement disk (160) may selectively cover the connection pipe (50) or the main pipe (10) in response to rotation of open/close direction. The inducement disk (160) may cover an inlet of the connection pipe (50) during upward rotation, and cover the main pipe (10) during downward rotation. The inducement disk (160) may be provided with an inducement disk orifice (161) to allow only a part of the fluid to pass therethrough. A part of the inducement disk (160) may be provided in a cut-off shape to allow only a part of the fluid to pass therethrough.

The slam reduction means may take an independent module shape at an area crossed by the main pipe (10) installed with the inducement disk (160) and the connection pipe (60). The slam reduction means of independent module shape may be connected to a pipe joint member (11) between the main pipe (10) of suction side (1) and a main pipe (10) of discharge side, and may include a connection pipe (50) connected by the pressure tank (5) to take a substantially T-shaped look.

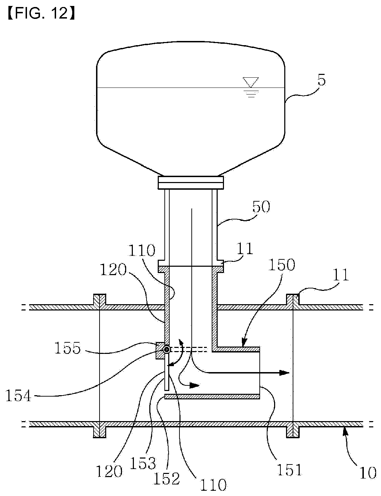

Referring to FIG. 11 illustrating the first status and FIG. 12 illustrating the second status, an inducement disk stopper (165) may be provided at an inner wall of the main pipe (10) in order to restrict an excessive rotation of the inducement disk (16) or to arrange the inducement disk (160) at a desired slant angle.

Referring to FIG. 10, the inducement disk (160) is upwardly rotated by the negative pressure of the pump (2) during a normal operation of the pump (2), and the main pipe (10) is opened and the connection pipe (50) is covered on at least a part thereof by the inducement disk (160). The fluid can be smoothly transferred along the forward direction of the main pipe (10) while the frictional resistance is minimized.

Referring to FIG. 11, a vapor cavity may be generated at a rear side of the check valve (4) because the negative pressure of the pump (2) is extinguished during a sudden stop of the pump (2), or the pressure inside the main pipe (10) is decreased, and the fluid transferred to the forward direction as illustrated in FIG. 10 may back-flow to the backward direction as illustrated in FIG. 11. The fluid stored in the pressure tank (5) may be discharged to the main pipe (10) through the connection pipe (50), and the inducement disk (160) may be rotated downwardly. As a result, the connection pipe (50) is opened and the main pipe (10) is covered while the fluid discharged to the main pipe (10) through the connection pipe (50) may be ejected to the forward direction.

As discussed above, the fluid ejected at a high pressure from the pressure tank (5) to the main pipe (10) is induced to the forward direction of the main pipe (10), such that a rear side of the check valve (4) is relatively lowered in pressure and the backward flow is delayed.

When the slam reduction means is provided, and when the backflow velocity is relatively slow over that of FIG.1, and when the pressure at a rear side of the check valve (4) is relatively low over that of FIG. 1, the disk of the check valve (4) is closed, whereby an effect can be accomplished of the slam phenomenon of the check valve (4) being reduced and the water hammer being mitigated.

In an exemplary embodiment, a diameter of the inducement disk (160) may be formed smaller than that of the connection pipe (50) and that of the main pipe (10), and the connection pipe (50) and the main pipe (10) can be partially covered. At this time, a gap may be generated between the connection pipe (50) and the inducement disk (160) and a gap may be generated between the main pipe (10) and the inducement disk (160).

The fluid flowing to the backward direction may be moved to the check valve (4) side through the gap between the main pipe (10) and the inducement disk (160). The gap in FIGS. 10 and 11 is a gap between a bottom side of the inducement disk (160) and the main pipe (10).

The fluid flowing backward through the gap between the main pipe (10) and the inducement disk (160) is increased in frictional resistance to be lowered in pressure, and the pressure applied to the check valve (4) is also reduced, whereby the slam phenomenon of the check valve (4) and the water hammer can be reduced. The gap may perform the same function as that of the disk orifice (161).

Now, referring to FIG. 12, as an improved exemplary embodiment to the first exemplary embodiment of the slam reduction means, an exemplary embodiment is illustrated for reducing the frictional resistance to the forward direction by providing a second opening valve (153) to an inducement pipe (150).

One side of the inducement pipe (150) may be provided with a first opening (151) exposed toward the forward direction according to an exemplary embodiment, and the other side of the inducement pipe (150) may be provided with a second opening exposed toward the backward direction. At this time, a second opening valve (153) may be provided that is so rotated as to open/close at least a part of the second opening (152).

When the fluid in the pressure tank (5) is discharged under the second status, the second opening valve (153) may close the second opening (152) and may restrict the fluid in the pressure tank (5) from flowing backward. Meantime, the fluid in the pressure tank (5) may be changed in direction along an inner wall bent to the forward direction of the inducement pipe (150) and may be discharged to the forward direction through the first opening (151).

When the forward fluid in the main pipe (10) is faced, the second opening valve (153) may be rotated to open the second opening (152). Because the forward fluid can be smoothly flowed through the second opening (152), the frictional resistance of the forward fluid relative to the second wall portion (120) of the inducement pipe (150) may be decreased by the second opening (152) and the second opening valve (153).

As in the inducement disk (160) discussed above, a second opening valve hinge (154) may be provided to rotatably support the second opening valve (153), and a second opening valve stopper (155) may be provided to restrict a rotational angle of the second opening valve (153).

FIG. 13 is an exploded view illustrating a first wall portion according to attachable and detachable exemplary embodiment of the present invention, where a first wall portion (110) may be attached to or detached from the main pipe (10) by an insertion portion (230) and a fastening member.

The main pipe (10) may be disposed with an opened insertion portion (230) to insert the first wall portion (110), where the first wall portion (110) may be attached to or detached from the main pipe (10) by a coupling member (240) after being inserted into the main pipe (10) through the insertion portion (230). When the first wall portion (110) is coupled to the insertion portion (230), a distal end of the first wall portion (110) may be aligned toward the forward direction.

For explanation, FIG. 13 exemplifies an inducement pipe (150) as a first wall portion (110), and shows a status in which the bent inducement pipe (150) is attached to and detached from the insertion portion (230) of the main pipe (10). Although not illustrated, the inducement disk (160), the inducement cylinder (140) and the inducement guide (170) may be also installed in an attachable/detachable structure using the insertion portion (230) and the coupling member in the same method as that of FIG. 13.

A T-shaped main pipe (210) illustrated in FIG. 13 may be included in the main pipe (10) according to the present invention. When the T-shaped main pipe (210) is coupled using a pipe joint member (11), the main pipe (10) of the present invention can be configured on the whole.

The main pipe (10) may include an inducement pipe (150) insertion portion (230) opened for insertion of the inducement pipe (150). The inducement pipe (150) may be attached to or detached from the main pipe (10) by an inducement pipe (150) coupling member (240) after being inserted into the main pipe (10) through the inducement pipe (150) insertion portion (230). When the inducement pipe (150) is coupled to the inducement pipe (150) coupling member (240), a distal end of the inducement pipe (150) may face the forward direction.

The inducement pipe (150) coupling member (240) may be provided at the connection pipe (50), the inducement pipe (150) coupling member (240) may be also provided at the inducement pipe (150) and the inducement pipe (150) coupling member (240) may be also provided at the T-shaped main pipe (210), and when these pipes (50, 150, 210) are centered and coupled by a bolt, the inducement pipe (150) may be coupled in an aligned state toward the forward direction. When the inducement pipe (150) coupling member (240) is separated during maintenance and repair of the inducement pipe (150), the inducement pipe (150) can be easily pulled out of the main pipe (10).

Referring to FIG. 14, FIG. 14 illustrates a third exemplary embodiment of the slam reduction means. The slam reduction means according to an exemplary embodiment, as a member integral with or separate from the connection pipe (50), may include an inducement cylinder (140) connected to the connection pipe (50). The inducement cylinder (140) may be a straight pipe instead of a bent elbow pipe. The inducement cylinder (140) may be straightly extended toward an interior of the main pipe (10) from the connection pipe (50). An inner wall of the inducement cylinder (140) may form the first wall portion (110), and an external wall of the inducement cylinder (140) may form the second wall portion (120), and an area where the inducement cylinder (140) is connected to the main pipe (10) may be formed with a support portion (130).

The fluid of the pressure tank (5) under the second status may be restricted from a backward flow by the first wall portion (110) corresponding to the inner wall of the inducement cylinder (140). The fluid in the pressure tank (5) under the second status may be discharged to the forward direction through an inducement cylinder opening (141) formed at one side of the inducement cylinder (140).

The fluid inside the main pipe (10) under the second status may be introduced into the pressure tank (5) through the inducement cylinder opening (141). The inducement cylinder opening (141) may be exposed to the forward direction and may be formed at a lateral surface of the inducement cylinder (140).

At this time, when the shape and size of inducement cylinder opening (141) is adjustably controlled, the same effect can be obtained as the flow resistance increaser discussed in the foregoing. That is, when fluid is flowed backward, the frictional resistance may increase due to the inducement cylinder opening (141) to thereby reduce the pressure of the fluid introduced into the pressure tank (5), whereby the operation pressure of the pressure tank (5) can be reduced and the design pressure can be also reduced.

Meantime, when a cross-section of the inducement cylinder opening (141) is narrowed toward the forward direction, the same effect as that of venturi (14) in the foregoing discussion can be obtained. That is, a backflow delay effect of the pipe water can be further enhanced by a difference of cross-section between the front side and the rear side of the inducement cylinder opening (141), and the ejector effect and slam reduction effect of check valve (4) can be further enhanced.

When the fluid is flowed backward, the frictional resistance is increased by the inducement cylinder opening (141) to reduce the pressure of the fluid introduced into the pressure tank (5), whereby the operation pressure of the pressure tank (5) and the design pressure can be reduced.

Meantime, when the straightly-shaped inducement cylinder (140) illustrated in FIG. 14 is inserted into the header as shown in FIG. 7, and a distal end of the inducement cylinder (140) is formed with the inducement cylinder opening (141), an exemplary embodiment same as in FIG. 7 can be implemented.

FIG. 15 illustrates a fourth exemplary embodiment of the slam reduction means.

The main pipe (10) according to the exemplary embodiment may include a first main pipe (101) connected by the pump (2) and the check valve (4), and a second main pipe (102) connected by the pressure tank (5) and the connection pipe (50). The first main pipe (101) may be a main pipe (10) disposed at the inlet side, and the second main pipe (102) may be a main pipe (10) disposed at an outlet or discharge side, The first main pipe (101) and the second main pipe (102) may be sequentially arranged toward the forward direction.

The slam reduction means according to an exemplary embodiment may include an inducement guide (170) installed at an inside of the first main pipe (101) or at an inside of the second main pipe (102). The inducement guide (170) may be formed at one surface with a first wall portion (110) facing the pressure tank (5) and the connection pipe (50), and may be formed at the other surface with a second wall portion (120) facing the inside of the main pipe (10). The inducement guide (170) may be formed at one surface with a first wall portion (110) facing the pressure tank (5) and the connection pipe (50), and may be formed at the other surface with a second wall portion (120) facing the pump (2) and the check valve (4).

An area where the inducement guide (170) crosses the main pipe (10) or the connection pipe (50) may correspond to the support portion (130).

The fluid of the pressure tank (5) under the second status may be discharged toward the inside of the main pipe (10) through a distal end (171) of the inducement guide (170). Albeit not being illustrated, the fluid in the pressure tank (5) may be discharged through an inducement guide opening formed at the inducement guide (170).

The distal end (171) of the inducement guide (170) may be exposed toward the forward direction. At least a part of the inducement guide (170) may be bent toward a center of the main pipe (10), whereby the fluid in the pressure tank (5) may be discharged to the forward direction while the flow is being restricted to the backward direction.

The venturi (14) may be disposed at a rear side over the distal end of the inducement pipe (150). The velocity of the fluid discharged through the inducement pipe (150) is increased while passing through a narrow cross-section of the venturi (14) and may absorb a surrounding fluid due to pressure drop. The pressure of the fluid may in turn increase while passing through the broadened cross-section to thereby increase the ejector effect, whereby the backflow delay effect of the fluid and the slam reduction effect can be maximized.

Although the abovementioned embodiments according to the present invention have been described in detail with reference to the above specific examples, the embodiments are, however, intended to be illustrative only, and thereby do not limit the scope of protection of the present invention. Thereby, it should be appreciated that changes, modifications and amendments to the above examples may be made without deviating from the scope of protection of the invention.

**Claims**

1. A water piping system, the water piping system comprising:

    a pump configured to apply pressure on a fluid to a forward direction;
    a main pipe configured to move the fluid pressurized by the pump;
    a check valve configured to open or close the main pipe, and arranged at a discharge side of the pump;

a pressure tank connected to the main pipe, arranged at a discharge side of the check valve, configured to be operated under a first status introducing the fluid of the main pipe into an inside of the pressure tank in response to a pressure difference between the pressure tank and the main pipe, and configured to be operated under a second status discharging the fluid to the main pipe in response to a pressure difference between the pressure tank and the main pipe;

a connection pipe connecting the pressure tank to the main pipe; and

a slam reduction means disposed with a first wall portion,

wherein the first wall portion restricts the fluid of the pressure tank from being discharged into a backward direction which is an opposite direction of the forward direction when the fluid of the pressure tank is discharged into an inside of the main pipe under the second status,

wherein the first wall portion discharges the fluid of the pressure tank to the forward direction when the fluid of the pressure tank is discharged into an inside of the main pipe under the second status,

and wherein the first wall portion is arranged inside the main pipe.

2. The water piping system of claim 1, wherein the first wall portion faces the fluid introduced into the pressure tank under the first status, and the first wall portion faces the fluid discharged from the pressure tank to the main pipe under the second status.

3. The water piping system of claim 1, wherein the first wall portion takes a flat surface shape or a curved surface shape, and the first wall portion changes a discharge direction of the fluid of the pressure tank to the forward direction, when the fluid of the pressure tank reaches the flat or curved surface under the second status.

4. The water piping system of claim 1, wherein the slam reduction means is disposed with a second wall portion which is an opposite surface of the first wall portion,

wherein the second wall portion faces a forward direction fluid transferred from the pump or the second wall portion faces the fluid inside the main pipe,

and wherein the second wall portion together with the first wall portion is arranged inside the main pipe.

5. The water piping system of claim 1, wherein the slam reduction means is disposed with a second wall portion which is an opposite surface of the first wall portion, and the second wall portion faces a forward direction fluid transferred from the pump under the first status or the second status.

6. The water piping system of claim 1, wherein the slam reduction means includes a second wall portion and a support portion,

wherein the second wall portion is provided at an opposite surface of the first wall portion,

and wherein the first wall portion and the second wall portion is supported to the main pipe or the connection pipe by the support portion .

7. The water piping system of claim 1, wherein the slam reduction means is provided at a position where the connection pipe communicates with an inside of the main pipe.

8. The water piping system of claim 1, wherein the fluid discharged into a forward direction by the slam reduction means restricts a vapor cavity formed by pressure drop of the fluid in the main pipe under an open or closure status of the check valve,

and wherein the fluid discharged into a forward direction by the slam reduction means pushes the fluid inside the main pipe under the second status to a direction away from the check valve.

9. The water piping system of claim 1, wherein the main pipe includes a joint pipe and the joint pipe takes a both-side opened shape,

wherein the joint pipe is attachable to the main pipe and detachable from the main pipe,

wherein the connection pipe and the slam reduction means are connected to the joint pipe to communicate with the main pipe,

and wherein the first wall portion is disposed at the joint pipe.

10. The water piping system of claim 1, wherein the main pipe includes a header, and the header is connected to a rear side of the check valve to converge the fluid discharged from the pump,

wherein the connection pipe and the slam reduction means are connected to the header to communicate with the main pipe,

and wherein the first wall portion is disposed at the header.

11. The water piping system of claim 1, wherein the main pipe includes a header, and the header is connected to a rear side of the check valve to converge the fluid discharged from the pump, and the connection pipe and the slam reduction means are connected to the header to communicate with the main pipe, and the first wall portion is inserted into the header from a distal end of the header, and the first wall portion is parallel to the header in order to allow the fluid of the pressure tank to face the forward direction.

12. The water piping system of claim 1, wherein a venturi is provided at a farther rear side than the slam reduction means in order to act a flow resistance on the fluid discharged to the forward direction from the slam reduction means.

13. The water piping system of claim 1, wherein the pump and the check valve are provide in the plural number, and each pump is connected to each check valve, and the fluid having passed the pump and the check valve is transferred to the main pipe.

14. The water piping system of claim 1, wherein the first wall portion takes a shape of a pipe connected to the connection pipe as a member integrated to the connection pipe or a member different from the connection pipe, and the first wall portion is extended to inside of the main pipe, and an opening of a distal end of the first wall portion faces the forward direction, and the fluid of the pressure tank under the second status is discharged into the main pipe through the opening of the distal end of the first wall portion by passing through the connection pipe.

15. The water piping system of claim 1, wherein the slam reduction means includes a pipe-shaped inducement pipe, and the inducement pipe is arranged at an inside of the main pipe, and the inducement pipe is connected to the connection pipe, and an inside wall of the inducement pipe forms the first wall portion, and the inducement pipe is bent to face the forward direction or the inducement pipe is inclined to the forward direction.

16. The water piping system of claim 1, further comprising an inflow resistance increaser configured to decrease an operating pressure of the pressure tank by increasing resistance of the fluid introduced into the pressure tank under the first status, wherein the inflow resistance increaser is disposed at a flow path of the fluid of the pressure tank and the flow path of the fluid of the pressure tank reaches the first wall portion through the connection pipe from the pressure tank, and wherein the inflow resistance increaser opens the flow path of fluid of the pressure tank under the second status and the inflow resistance increaser closes at least a part of the flow path of fluid of the pressure tank under the first status.

17. The water piping system of claim 1, wherein the slam reduction means includes a pipe-shaped inducement pipe arranged at an inside of the main pipe by being connected to the connection pipe, wherein an inside wall of the inducement pipe forms the first wall portion, wherein a first opening exposed to the forward direction is provided at one side of the inducement pipe, and a second opening exposed to the backward direction is provided at the other side of the inducement pipe, wherein a second opening valve is provided to open or close at least a part of the second opening, and the second opening valve closes the second opening under the second status, and wherein the fluid of the pressure tank is discharged to the forward direction through the first opening under the second status.

18. The water piping system of claim 1, wherein the main pipe is disposed with an insertion portion opened to insert the first wall portion, and the first wall portion is attached to or detached from the main pipe by a coupling member after being inserted into the main pipe through the insertion portion, and a distal end of the first wall portion faces the forward direction when the first wall portion is coupled to the insertion portion.

19. The water piping system of claim 1, wherein the slam reduction means includes a guide cylinder connected to the connection pipe as a member integrated to the connection pipe or a member different from the connection pipe, and the guide cylinder is linearly extended toward an inside of the main pipe from the connection pipe, and an inside wall of the guide cylinder forms the first wall portion, and the fluid of the pressure tank under the second status is discharged to the forward direction through a guide cylinder opening formed at one side of the guide cylinder through an inside of the guide cylinder.

20. The water piping system of claim 1, wherein the slam reduction means includes a guide disk provided at an inside of the main pipe between the check valve and the connection pipe, wherein the guide disk applies a first resistance to the fluid flowing to the forward direction and the guide disk applies a second resistance stronger than the first resistance to the fluid flowing to backward direction, and wherein the guide disk reduces a cross-section of the main pipe when the fluid is discharged to the main pipe from the pressure tank.

21. The water piping system of claim 1, wherein the slam reduction means includes a guide disk provided at an inside of the main pipe between the check valve and the connection pipe, wherein the guide disk includes the first wall portion facing the fluid of the pressure tank discharged from the connection pipe, a second wall portion facing the fluid transferred from the pump to the forward direction, and a support portion rotatably connecting the first wall portion and the second wall portion to the connection pipe or to the main pipe,

and wherein the guide disk rotates to a position restricting the fluid of the pressure tank from flowing to the backward direction when the fluid of the pressure tank is discharged from the connection pipe to the main pipe.

22. The water piping system of claim 1, wherein the slam reduction means includes a guide disk arranged between the check valve and the connection pipe, wherein the guide disk opens or closes the main pipe in response to a difference between pressure which the fluid discharged from the pressure tank acts on the first wall portion and pressure which the fluid flowing in the main pipe acts on the second wall portion, and wherein the first wall portion closes the main pipe and restricts the fluid of the pressure tank from back-flowing to the backward direction when the fluid of the pressure tank is discharged.

23. The water piping system of claim 1, wherein the first wall portion is provided at one surface of the guide disk rotatably disposed at an inside of the main pipe, wherein the guide disk is disposed at an area where the main pipe and the connection pipe are crossed, wherein the guide disk opens the main pipe and closes only a part of the connection pipe when the pump is activated, and wherein the guide disk opens the connection pipe and closes only a part of the main pipe when the pump is tripped or stopped.

24. The water piping system of claim 1, wherein a guide disk formed at one surface with the first wall portion is disposed at an inside of the main pipe, wherein a support portion is configured to support the guide disk to the connection pipe or the main pipe, and the support portion rotatably supports the first wall portion, and wherein a rotation angle between a position of the first wall portion rotated to open the main pipe and a position of the first wall portion rotated to close the main pipe, is an acute angle.

25. The water piping system of claim 1, wherein a guide disk formed at one surface with the first wall portion is rotatably disposed at an inside of the main pipe using a disk hinge, and wherein a guide disk stopper restricting a rotation angle of the first wall portion is provided at an inside of the main pipe.

26. The water piping system of claim 1, wherein a guide disk formed at one surface with the first wall portion is rotatably disposed at an inside of the main pipe using a disk hinge, and wherein a diameter of the guide disk is formed to be smaller than a diameter of the connection pipe and a diameter of the main pipe in order to partially close the connection pipe and the main pipe respectively.

27. The water piping system of claim 1, wherein the first wall portion is provided at one surface of the guide disk rotatably disposed at an inside of the main pipe, wherein the guide disk is disposed with a guide disk orifice or the guide disk is provided in a partially cut shape, and wherein the guide disk partially closes the connection pipe and the main pipe respectively.

28. The water piping system of claim 1, wherein the main pipe includes a first main pipe connected with the pump and the check valve, and a second main pipe connected with the pressure tank and the connection pipe, wherein the slam reduction means includes an inducement guide disposed at an inside of the first main pipe or at an inside of the second main pipe, and wherein one surface of the inducement guide forms the first wall portion facing the pressure tank and the connection pipe, and the other surface of the inducement pipe forms a second wall portion facing the fluid of the main pipe.

29. The water piping system of claim 1, wherein the main pipe includes a first main pipe connected with the pump and the check valve, and a second main pipe connected with the pressure tank and the connection pipe, and wherein the first main pipe and the second main pipe are sequentially arranged along the forward direction, and the slam reduction means includes an inducement guide extended from the first main pipe to an inside of the second main pipe.

30. The water piping system of claim 1, wherein the slam reduction means includes an inducement guide, and the inducement guide is extended to an inside of the main pipe, and one side of the inducement guide forms the first wall portion facing the pressure tank and the connection pipe, and the fluid of the pressure tank is discharged into the main pipe through the inducement guide, and at least a part of the inducement guide is bent to a center of the main pipe.

【FIG. 1】

【FIG. 2】

【FIG. 3】

【FIG. 4】

【FIG. 5】

【FIG. 6】

【FIG. 7】

【FIG. 8】

【FIG. 9】

(a)

(b)

(c)

(d)

【FIG. 10】

【FIG. 11】

【FIG. 12】

【FIG. 13】

【FIG. 14】

【FIG. 15】

## INTERNATIONAL SEARCH REPORT

| | International application No. |
|---|---|
| | **PCT/KR2016/009399** |

**A. CLASSIFICATION OF SUBJECT MATTER**

*F17D 5/00(2006.01)i, F17D 1/14(2006.01)i, F16L 55/045(2006.01)i, F04B 49/10(2006.01)i*

According to International Patent Classification (IPC) or to both national classification and IPC

**B. FIELDS SEARCHED**

Minimum documentation searched (classification system followed by classification symbols)

F17D 5/00; F16L 55/24; A23L 11/00; F16L 55/04; F16L 55/02; F24H 9/20; F24D 19/10; F17D 1/14; F16L 55/045; F04B 49/10

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: pipe, water hammer, pump, main pipe, check valve, pressure tank, connection pipe, slam alleviating means

**C. DOCUMENTS CONSIDERED TO BE RELEVANT**

| Category* | Citation of document, with indication, where appropriate, of the relevant passages | Relevant to claim No. |
|---|---|---|
| A | KR 10-2009-0054162 A (YANG, Cheol Soo) 29 May 2009<br>See paragraphs [0014]-[0020] and figure 1. | 1-30 |
| A | KR 20-0464107 Y1 (HWANG, Kwang Yeon) 11 December 2012<br>See paragraphs [0016]-[0020] and figure 3. | 1-30 |
| A | KR 10-2006-0020847 A (SAMSUNG ELECTRONICS CO., LTD.) 07 March 2006<br>See claim 1 and figure 3. | 1-30 |
| A | KR 10-0868908 B1 (YANG, Jae Gu et al.) 14 November 2008<br>See claim 2 and figure 2. | 1-30 |
| A | JP 07-133892 A (HITACHI LTD.) 23 May 1995<br>See paragraphs [0023]-[0025] and figure 28. | 1-30 |

☐ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 DECEMBER 2016 (14.12.2016) | **15 DECEMBER 2016 (15.12.2016)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/009399**

| Patent document cited in search report | Publication date | Patent family member | Publication date |
|---|---|---|---|
| KR 10-2009-0054162 A | 29/05/2009 | KR 10-0932689 B1 | 21/12/2009 |
| KR 20-0464107 Y1 | 11/12/2012 | NONE | |
| KR 10-2006-0020847 A | 07/03/2006 | NONE | |
| KR 10-0868908 B1 | 14/11/2008 | NONE | |
| JP 07-133892 A | 23/05/1995 | JP 3388300 B2 | 17/03/2003 |

Form PCT/ISA/210 (patent family annex) (January 2015)